# EUROPÄISCHE PATENTANMELDUNG

(11) **EP 3 470 806 A1**
(43) Veröffentlichungstag der Anmeldung: **17.04.2019**
(21) Anmeldenummer: 18197244.9
(22) Anmeldetag: 27.09.2018
(51) Int. Cl.: G01K 11/12, B29C 73/34, B29C 35/02, B64F 5/40

(54) **FARBBASIERTES HEIZSYSTEM**

(30) Priorität: 29.09.2017 DE 202017105967 U
(71) Anmelder: Airbus Operations GmbH, 21129 Hamburg (DE)
(72) Erfinder: Karrasch, Roman, 21129 Hamburg (DE); Kleinpeter, Tobias, 21129 Hamburg (DE)

(57) **Zusammenfassung**

Folie für die Reparatur von Flugzeugbauteilen aus faserverstärktem Kunststoff aufweisend Farbwechseleigenschaften.

## Beschreibung

### Gebiet der Erfindung

Die Erfindung betrifft das Erhitzen von Reparaturzonen im Flugzeug- und Flugzeugkomponentenbau.

### Hintergrund der Erfindung

Thermoplastische Materialien werden immer mehr eingesetzt. Im Zusammenhang mit diesem neuen Material sind Reparatur- und Nacharbeitsmethoden erforderlich. Beispiele sind das Temperieren von Heizreparaturzonen durch Infrarotlicht, Keramikheizung, Heizdecken oder Warm-Air-Boxen. Alle bekannten Heizsysteme basieren auf einem Thermoelement zur Regelung des Heizgerätes. Warmluftboxen (engl. Warm-Air-Boxes) verwenden beispielsweise ein Thermoelement, um die Temperatur zu regulieren. Eine Heizung wärmt die Luft und erzeugt eine Konvektion innerhalb der Box. Eine Aufgabe der vorliegenden Erfindung war Erreichen einer besseren Temperaturverteilung auf dem Bauteil.

### Beschreibung der Erfindung

Es hat sich nun für den Fachmann völlig überraschend herausgestellt, dass eine Folie mit Farbwechseleigenschaften für die Reparatur von Flugzeugbauteilen aus faserverstärktem Kunststoff geeignet ist. Damit lassen sich computer- und Kameragestützt Heizgeräte steuern, dir eine lokale Temperierung einer Reparaturstelle erlauben. Dabei ist es bevorzugt, wenn die Farbwechseleigenschaften temperaturabhängig sind. Dabei ist es bevorzugt, wenn die Farbwechseleigenschaften reversibel sind. Die Erfindung umfasst auch ein System zum Beheizen einer Reparaturstelle eines Bauteils aus faserverstärktem Kunststoff umfassend eine erfindungsgemäße Folie , eine Kamera und eine Heizplatte. Dabei ist es bevorzugt, wenn die Heizplatte einzeln steuerbare Heizzonen aufweist. Dabei ist es bevorzugt, wenn das System einen Controller aufweist, der lokale Farbsignale der Kamera zur lokalen Steuerung der lokalen Heizzonen der Heizplatte verwendet.

Dabei ist es bevorzugt, wenn der Controller lokale Farbsignale der Kamera Temperaturen zuweist. Dabei ist es bevorzugt, wenn die lokale Steuerung der lokalen Heizzonen der Heizplatte so erfolgt, das unter Solltemperatur liegende Bereiche der Reparaturzone mehr aufgeheizt werden, als andere Bereiche der Reparaturzone.

Dabei ist es bevorzugt, wenn die lokale Steuerung der lokalen Heizzonen der Heizplatte so erfolgt, das über Solltemperatur liegende Bereiche der Reparaturzone weniger aufgeheizt werden, als andere Bereiche der Reparaturzone.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### Kurze Beschreibung der Zeichnungen

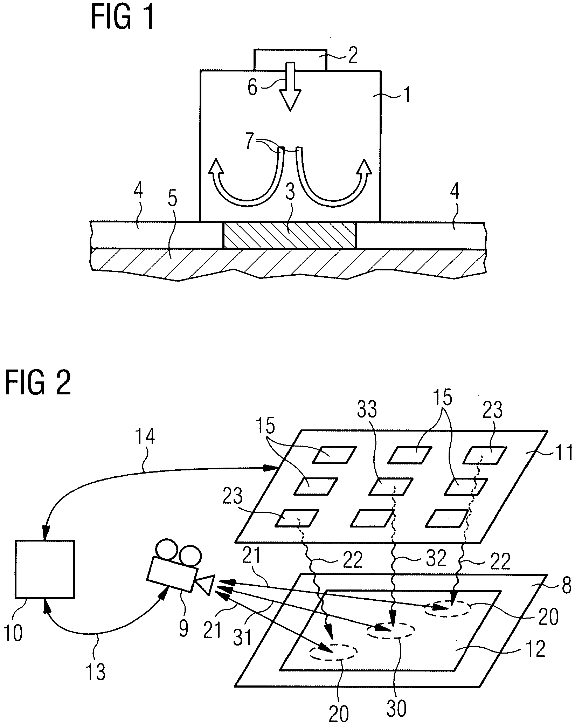

Figur 1 zeigt eine herkömmliche Wärmebox, Figur 2 zeigt ein erfindungsgemäßes System

In den Figuren werden gleiche Bezugszeichen für gleiche oder zumindest ähnliche Elemente, Komponenten oder Aspekte verwendet. Es wird angemerkt, dass im Folgenden Ausführungsformen im Detail beschrieben werden, die lediglich illustrative und nicht beschränkend sind.

### Detaillierte Beschreibung von Ausführungsformen

Figur 1 zeigt eine herkömmliche Wärmebox (1) mit einem Lüftungs- und Heizgerät (2). Die Wärmebox (1) wird auf einer zu beheizenden Reparaturstelle (3) positioniert. Die zu beheizenden Reparaturstelle (3) grenzt an intakte Bereiche (4) an. Unterhalb der Bereiche (3) und (4) kann sich ein intakter Bereich oder ein Werkzeug (5) befinden. Das Lüftungs- und Heizgerät (2) erzeugt eine Warmluftstrom (6), der sich innerhalb der Wärmebox (1) seinen Weg (7) sucht und eine gleichmäßige Temperatur innerhalb der Wärmebox (1) durch Konvektion erreicht. Die Regelung des Heizgerätes (2) basiert auf einem Thermoelement, das die aktuelle Temperatur überwacht. Die Steuerung assimiliert das Signal an ein Steuersignal für die Heizung. Die Regelung erlaubt eine Temperatur +/- 5 ° C Differenz zwischen Istwert und Sollwert. Manchmal ist es nicht möglich, innerhalb der Grenzen zu bleiben, denn es gibt lokale, vorübergehende warme oder kalte Gebiete, die durch exotherme Reaktion oder andere, nicht berechenbare Gründe verursacht werden.

Figur 2 zeigt ein erfindungsgemäßes System.

Das erfindungsgemäße System umfasst eine Farbwechselfolie (8), eine Kamera, einen Controller (10), z.B. einen Computer und eine Heizplatte (11) vor. Die Farbwechselfolie (8) ändert ihre Farbe entsprechend der Temperatur. Es können zwei verschiedene Arten von Folie eingesetzt werden: a) Die Farbe ändert sich je nach Temperatur kontinuierlich durch ein gegebenes Farbspektrum. b) Es gibt zwei "Farbschritte", zum Beispiel, wenn die Temperatur innerhalb eines bestimmten Bereiches liegt, ist die Folie grün. Wenn die Temperatur zu hoch ist, wird die Folie rot und wenn die Temperatur zu niedrig ist, wird die Folie blau. Die Kamera (9) überwacht die Reparaturzone (12), insbesondere die Farbe der Folie, und sendet einen Livestream (13) an den Controller/ Computer (10). Der Computer (10) ordnet den von der Kamera (9) empfangen Farben im Bild eine Temperatur zu und erzeugt ein Signal (14) für die Heizplatte (11). Die Heizplatte ist lokal steuerbar und weist verscheidene Heizzonen (15) auf. Entsprechend dem Steuersignal (14), das vom Controller (10) empfangen wird, heizt es die Reparaturzone (12) lokal auf.

Beispielsweise kann ein Bereich der Reparaturstelle (20), der über Solltempertur liegt durch optische Inspektion (21) seiner lokalen Farbe durch entsprechende Steuerung der entsprechenden Heizzone (23) mit weniger Energie (22) bestrahlt werden, während ein Bereich der Reparaturstelle (30), der unter Solltempertur liegt durch optische Inspektion (31) seiner lokalen Farbe durch entsprechende Steuerung der entsprechenden Heizzone (33) mit mehr Energie (32) bestrahlt werden, um eine einheitliche Temperierung der Reparaturstelle (12) zu erreichen. Das Ergebnis ist eine Heizungsanlage für Reparaturzonen, die lokal auf die aktuelle Temperatur geregelt werden kann. Die Folie (8) kann auch als Vakuumfolie verwendet werden und kann die herkömmliche Vakuumfolie ersetzen.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist. In den Ansprüchen schließt das Wort "aufweisend" nicht andere Elemente aus und der unbestimmte Artikel "ein" schließt eine Mehrzahl nicht aus.

Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken.

### Bezugszeichenliste

- 1: Wärmebox
- 2: Lüftungs- und Heizgerät
- 3: zu beheizenden Reparaturstelle
- 4: intakte Bereiche
- 5: intakter Bereich oder Werkzeug
- 6: Warmluftstrom
- 7: Konvektive Verteilung der Warmluft
- 8: Farbwechselfolie
- 9: Kamera
- 10: Controller / Computer
- 11: Heizplatte
- 12: Reparaturzone
- 13: Livestream
- 14: Steuersignal
- 20: zu warmer Bereich der Reparaturstelle
- 21: optische Inspektion
- 22: Energiefluss
- 23: Heizzone
- 30: zu warmer Bereich der Reparaturstelle
- 31: optische Inspektion
- 32: Energiefluss
- 33: Heizzone

## Patentansprüche

1. Folie für die Reparatur von Flugzeugbauteilen aus faserverstärktem Kunststoff aufweisend Farbwechseleigenschaften.

2. Folie nach Anspruch 1 **dadurch gekennzeichnet, dass** ihre Farbwechseleigenschaften temperaturabhängig sind.

3. Folie nach einem der vorangehenden Patentansprüche **dadurch gekennzeichnet, dass** die Farbwechseleigenschaften reversibel sind.

4. System zum Beheizen einer Reparaturstelle eines Bauteils aus faserverstärktem Kunststoff umfassend eine Folie (8) nach einem der vorangehenden Patentansprüche, eine Kamera (9), eine Heizplatte (11).

5. System nach Anspruch 4 **dadurch gekennzeichnet, dass** die Heizplatte (11) einzeln steuerbare Heizzonen (15) aufweist.

6. System nach Anspruch 4 oder 5 **dadurch gekennzeichnet, dass** es einen Controller (10) aufweist, der lokale Farbsignale der Kamera (9) zur lokalen Steuerung der lokalen Heizzonen (15) der Heizplatte (11) verwendet.

7. System nach Anspruch 6 **dadurch gekennzeichnet, dass** der Controller (10) lokale Farbsignale der Kamera (9) Temperaturen zuweist.

8. System nach Anspruch 4 bis 7 **dadurch gekennzeichnet, dass** die lokale Steuerung der lokalen Heizzonen (15) der Heizplatte (11) so erfolgt, das unter Solltemperatur liegende Bereiche (30) der Reparaturzone (12) mehr aufgeheizt werden, als andere Bereiche der Reparaturzone (12).

9. System nach Anspruch 4 bis 8 **dadurch gekennzeichnet, dass** die lokale Steuerung der lokalen Heizzonen (15) der Heizplatte (11) so erfolgt, das über Solltemperatur liegende Bereiche (30) der Reparaturzone (12) weniger aufgeheizt werden, als andere Bereiche der Reparaturzone (12).
